# EUROPEAN PATENT APPLICATION

(11) **EP 4 299 250 A1**
(43) Date of publication of application: **03.01.2024**
(21) Application number: 22181519.4
(22) Date of filing: 28.06.2022
(51) Int. Cl.: B25B 23/147, B23B 45/02, B23B 49/00, B23P 19/06

(54) **MACHINE AND METHOD FOR RUNNING A MACHINE**

(71) Applicant: Hilti Aktiengesellschaft, 9494 Schaan (LI)
(72) Inventor: Wettstein, Andreas, 6800 Feldkirch (AT); Niesutta, Pablo, 9470 Buchs (CH)
(74) Representative: Hilti Aktiengesellschaft Corporate Intellectual Property

(57) **Abstract**

A machine and a method for drilling a hole or setting a screw, wherein the machine comprises a motor having a shaft, and a controller provided for providing electric current to the motor to rotationally drive the shaft, continuously determining a set of parameters characterizing a drilling and/or setting process, recognizing a parameter condition of each parameter of the set of parameters as constant if a change of the parameter over time is below a threshold, recognizing a parameter condition of each parameter of the set of parameters as changing if a change of the parameter over time is above the threshold, continuously determining a number of parameters the parameter condition of which is changing, and stopping the motor if the number is at least a predefined minimum number for a predetermined time interval.

## Description

### TECHNICAL FIELD

Described herein are machines and methods for running the machines to drill holes, such as pilot holes, and/or set screws. Also described are hand-held power tools for enabling drilling and/or screw-setting actions. Typically, such hand-held tools find a widespread use in the construction industry. A typical hand-held tool as intended to be covered by the scope of the present invention includes, but is not limited to, an automatic screw driver for screwing screw fasteners into a workpiece, thereby penetrating the workpiece, such as a metal plate, with a screw fastener.

### BACKGROUND ART

Hand-held power tools are known to enable setting actions of a screw. The tools comprise at least a machine housing including at least a motor that provides at least rotary motion to a rotary shaft. The rotary shaft, in turn, will ultimately transmit a certain torque at a certain rotational speed to a workpiece penetrating element, such as, for example, a drill or a screw fastener. A tool may also comprise a controller, for controlling the motor and continuously determining several parameters of the drilling or setting process, such as the delivered torque and rotational speed of the rotary shaft when the tool is in use.

One possible field of application is drilling pilot holes, e.g. in preparation for self-tapping and self-sealing threaded fastener using a stepped drill. Such work is usually done by professional construction workers who are used to press the stepped drill against a substructure with a great force and for a long time to ensure that the pilot hole is deep enough. Due to such a great force and long time, a shape of the pilot hole may become inaccurate.

### SUMMARY

According to one aspect, a method for running a machine to drill a hole and/or set a screw along a setting axis into a workpiece, wherein the machine comprises a motor having a shaft, comprises providing electric current to the motor to rotationally drive the shaft, continuously determining a set of parameters characterizing a drilling and/or setting process recognizing a parameter condition of each parameter of the set of parameters as constant if a change of the parameter over time is below a threshold, recognizing a parameter condition of each parameter of the set of parameters as changing if a change of the parameter over time is above the threshold, continuously determining a number of parameters the parameter condition of which is changing, and stopping the motor if the number is at least a predefined minimum number for a predetermined time interval. The predefined minimum number may be two, three, four, five or more. The predefined time interval may be a second, a fraction of a second, or zero.

According to another aspect, a machine for drilling a hole and/or setting a screw along a setting axis into a workpiece comprises a motor having a shaft, a switch, and a controller provided for providing electric current to the motor to rotationally drive the shaft, continuously determining a set of parameters characterizing a drilling and/or setting process, recognizing a parameter condition of each parameter of the set of parameters as constant if a change of the parameter over time is below a threshold, recognizing a parameter condition of each parameter of the set of parameters as changing if a change of the parameter over time is above the threshold, continuously determining a number of parameters the parameter condition of which is changing, and stopping the motor if the number is at least a predefined minimum number for a predetermined time interval. The predefined minimum number may be two, three, four, five or more. The predefined time interval may be a second, a fraction of a second, or zero.

According to an embodiment, the set of parameters comprises at least one of a force towards the machine along the setting axis applied to the shaft, a torque around the setting axis applied to the shaft, a voltage of the electric current provided to the motor, an amperage of the electric current provided to the motor, a rotational speed of the motor, an acceleration of the machine along the setting axis, an acceleration of the machine across the setting axis, a rotation of the machine around the setting axis, and a yaw rate of the machine, i.e. a rotation of the machine around an axis perpendicular to the setting axis.

### BRIEF DESCRIPTION OF THE DRAWINGS

Further aspects and advantages of the machine, associated parts and a method of use thereof will become apparent from the ensuing description that is given by way of example only and with reference to the accompanying drawings in which:

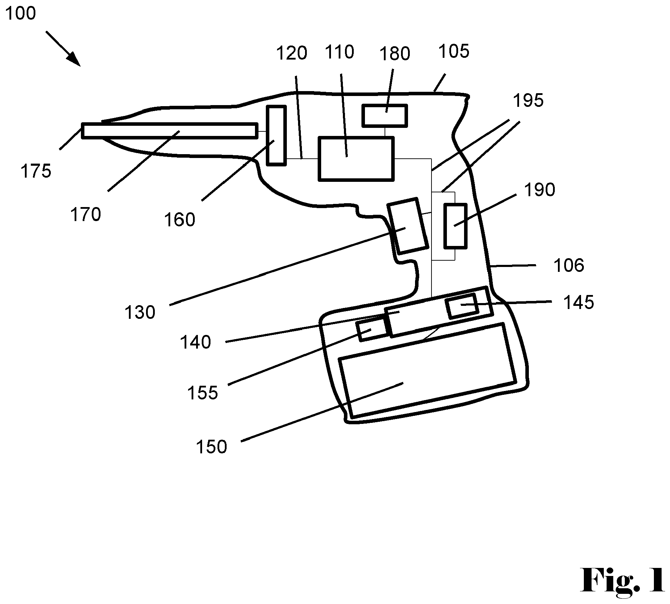

- Fig. 1: shows a machine for drilling holes and setting screws.

### DETAILED DESCRIPTION

Fig. 1 shows a machine 100 for drilling a hole and/or setting a screw. In the embodiment shown, the machine 100 is formed as a hand-held working tool such as an automatic screwdriver. The machine 100 comprises a housing 105 and, enclosed by the housing 105, a motor 110 having a shaft 120, a switch 130 formed as a trigger switch, a controller 140 formed as a microcomputer and having a data storage 145 formed as a computer memory, a battery 150, and a communication unit 155 formed as a wireless transmitter. The controller 140 provides electric current from the battery 150 to the motor 110 to rotationally drive the shaft 120. The machine 100 further comprises a gear 160 and a spindle 170 having a screw drive 175 such as a hex drive and driven by the shaft 120 via the gear 160.

Further, the machine 100 comprises a rotational-speed sensor 180 for detecting a rotational speed of the motor 110 and an amperage/voltage sensor 190 for detecting an amperage and/or voltage of the electric current provided to the motor 110. Further, the machine 100 comprises several acceleration sensors for detecting a force towards the machine along the setting axis applied to the shaft, an acceleration of the machine along the setting axis, an acceleration of the machine across the setting axis, a rotation of the machine around the setting axis, and a yaw rate of the machine, i.e. a rotation of the machine around an axis perpendicular to the setting axis.

Further, the machine 100 comprises lines 195 which connect the controller 140 with the motor 110, the switch 130 and sensors 180, 190 for transmitting electric current to the motor 110 and/or collecting electric signals from the switch 130 and/or sensors 180, 190. Additionally, or alternatively, to acquire data on the rotational speed, amperage or voltage of the motor 110, the controller 140 may use information already present from its controlling a rotational movement of the motor 110, for example the number of electrical commutations over time for the rotational speed. The housing 105 comprises a grip section 106 for manually gripping the machine 100 by a user such that the switch 130 can be pressed by the user's index finger. The switch 130 is capable of signaling its switch position to the controller 140 via the lines 195.

The controller 140 continuously determines a set of parameters characterizing a drilling and/or setting process, such as a force towards the machine along the setting axis applied to the shaft, a torque around the setting axis applied to the shaft, a voltage of the electric current provided to the motor, an amperage of the electric current provided to the motor, a rotational speed of the motor, an acceleration of the machine along the setting axis, an acceleration of the machine across the setting axis, a rotation of the machine around the setting axis, or a yaw rate of the machine.

In use, the machine 100 can be set-up by choosing the right clutch setting and gear, which activate e.g. a drilling mode. During the drilling process, the controller 140 monitors the parameters mentioned above, such as motor current as well as the acceleration and yaw rates in possibly all directions. The controller 140 recognizes a parameter condition of each parameter of the set of parameters as constant if a change of the parameter over time is below a threshold, or as changing if a change of the parameter over time is above the threshold. To this end, for each monitored parameter, two signals are derived by using appropriate filters. The first signal then shows a long-term value (e.g. 10 A current as a mean over the last 3 seconds of the drilling process). The second signal shows a more short-term value (e.g. the mean current of the last 30 ms of the drilling process). If the two derived signals differ from each other more than a defined threshold a condition counter for the end of the drilling is increased by one. The controller 140 continuously determines a number of parameters the parameter condition of which is changing, and automatically stops the motor after a waiting time of a fraction of a second if the number is at least two, three, four, or five for a predetermined time interval. In an alternative embodiment, the waiting time is zero.

In summary, when the step of the drill bit hits the surface of a substructure, some parameters characterizing the drilling process change (e.g. accelerations, motor current). The controller 140 recognizes the changes and stops the tool. The drilling process is reliably stopped at an early point of the process, thus saving time, producing a more accurate shape of the pilot hole or preventing unnecessary wear.

Throughout the present application, "current provided to the motor" is meant to include current that is measured within a power supply, such as a battery, if the hand-held power tool is a battery-operated tool.

The foregoing description of exemplary embodiments of the invention have been presented for purposes of illustration and of description. It is not intended to be exhaustive or to limit the invention to the precise form disclosed, and modifications and variations are possible in light of the above teachings or may be acquired from practice of the invention. The functionality described may be distributed among modules that differ in number and distribution of functionality from those described herein. Additionally, the order of execution of the functions may be changed depending on the embodiment. The embodiments were chosen and described in order to explain the principles of the invention and as practical applications of the invention to enable one skilled in the art to utilize the invention in various embodiments and with various modifications as suited to the particular use contemplated. It is intended that the scope of the invention be defined by the claims appended hereto and their equivalents.

## Claims

1. A method for running a machine to drill a hole and/or set a screw along a setting axis into a workpiece, wherein the machine comprises a motor having a shaft, the method comprising:
- providing electric current to the motor to rotationally drive the shaft;
- continuously determining a set of parameters characterizing a drilling and/or setting process;
- recognizing a parameter condition of each parameter of the set of parameters as constant if a change of the parameter over time is below a threshold;
- recognizing a parameter condition of each parameter of the set of parameters as changing if a change of the parameter over time is above the threshold;
- continuously determining a number of parameters the parameter condition of which is changing;
- stopping the motor if the number is at least a predefined minimum number for a predetermined time interval.

2. A method according to claim 1, wherein the set of parameters comprises at least one of a force towards the machine along the setting axis applied to the shaft, a torque around the setting axis applied to the shaft, a voltage of the electric current provided to the motor, an amperage of the electric current provided to the motor, a rotational speed of the motor, an acceleration of the machine along the setting axis, an acceleration of the machine across the setting axis, a rotation of the machine around the setting axis, and a yaw rate of the machine.

3. A method according to any of claims 1 and 2, wherein the predefined minimum number is two.

4. A method according to any of claims 1 and 2, wherein the predefined minimum number is three.

5. A method according to any of claims 1 and 2, wherein the predefined minimum number is four.

6. A method according to any of claims 1 and 2, wherein the predefined minimum number is five or more.

7. A method according to any of the preceding claims, wherein the predefined time interval is zero.

8. A machine for drilling a hole and/or setting a screw along a setting axis into a workpiece, comprising:
- a motor having a shaft;
- a switch;
- a controller provided for providing electric current to the motor to rotationally drive the shaft, continuously determining a set of parameters characterizing a drilling and/or setting process, recognizing a parameter condition of each parameter of the set of parameters as constant if a change of the parameter over time is below a threshold, recognizing a parameter condition of each parameter of the set of parameters as changing if a change of the parameter over time is above the threshold, continuously determining a number of parameters the parameter condition of which is changing, and stopping the motor if the number is at least a predefined minimum number for a predetermined time interval.

9. A machine according to claim 8, wherein the set of parameters comprises at least one of a force towards the machine along the setting axis applied to the shaft, a torque around the setting axis applied to the shaft, a voltage of the electric current provided to the motor, an amperage of the electric current provided to the motor, a rotational speed of the motor, an acceleration of the machine along the setting axis, an acceleration of the machine across the setting axis, a rotation of the machine around the setting axis, and a yaw rate of the machine.

10. A machine according to any of claims 8 and 9, wherein the predefined minimum number is two.

11. A machine according to any of claims 8 and 9, wherein the predefined minimum number is three.

12. A machine according to any of claims 8 and 9, wherein the predefined minimum number is four.

13. A machine according to any of claims 8 and 9, wherein the predefined minimum number is five or more.

14. A machine according to any of claims 8 to 13, wherein the predefined time interval is zero.
